# EUROPEAN PATENT SPECIFICATION

(11) **EP 0 614 092 B1**
(45) Date of publication and mention of the grant of the patent: **15.04.1998**
(21) Application number: 94200402.9
(22) Date of filing: 17.02.1994
(51) Int. Cl.: G01S 13/87, G01S 7/02, G01S 13/66, G01S 7/03, H01Q 21/22

(54) **Radar apparatus**
Radargerät
Appareil radar

(30) Priority: 03.03.1993 NL 9300383
(43) Date of publication of application: 07.09.1994
(73) Proprietor: HOLLANDSE SIGNAALAPPARATEN B.V., NL-7554 RR Hengelo (NL)
(72) Inventor: Zwarts, Johan Martin Carol, NL-7621 WC Borne (NL)

(56) References cited:
- US-A- 5 155 492
- IEEE TRANSACTIONS ON ANTENNAS AND PROPAGATION, vol.35, no.9, September 1987, NEW YORK US pages 1066 - 1070 NUMAZAKI ET AL. 'An Improved Thinnig Method for Density Tapering of Planar Array Antennas'
- IEEE CONFERENCE RECORD OF THE NINETEENTH POWER MODULATOR SYMPOSIUM, June 1990, NEW YORK,US pages 146 - 152, XP000207370 GARDENGHI ET AL. 'Power Supply Considerations for Pulsed Solid-State Radar'
- IEEE ANTENNAS AND PROPAGATION SOCIETY INTERNATIONAL SYMPOSIUM 1992 DIGEST, vol.ONE, July 1992, CHICAGO,US pages 437 - 440, XP000342361 AGRAWAL 'A TECHNIQUE FOR LOW TRANSMIT SIDELOBES IN ACTIVE PHASED ARRAYS'
- 1988 INTERNATIONAL SYMPOSIUM DIGEST ANTENNAS AND PROPAGATION, vol.II, June 1988, SYRACUSE,US pages 462 - 465 BENDIMERAD ET AL. 'SYNTHESIS OF UNIFORMLY EXCITED NON-PERIODIC ANTENNA ARRAYS: APPLICATION TO MICROSTRIP ANTENNAS'

## Description

The invention relates to a radar apparatus provided with an active phased array antenna having N modules, for generating pulsed radar transmissions in a first operating mode and for generating CW transmissions in a second operating mode.

In the first operating mode the radar apparatus may be used for regular radar transmissions, for producing a radar picture of the surroundings of for example a ship on which the radar apparatus is placed. In the second operating mode the radar apparatus may be used for illuminating one or more targets, for example for guiding semi-active missiles towards those targets, or for electronic countermeasures modes.

A radar apparatus of this type is known from US-A 5.155.492. In this known apparatus the dissipation of the modules is limited in the second operating mode solely by reducing the supply voltages and currents of the power amplifiers of the modules. A disadvantage of this known apparatus is that this inevitably results in rather specialized modules, with provisions for controlling the bias of the transistors used.

The advantage of the radar apparatus according to the invention is that standardized modules may be used as long as there is a provision, per module to switch the module on or off. The radar according to the invention is therefore characterized in that in the second operating mode only M out of N antenna modules are active, with M<N, that the N active modules are selected in a pseudo random way, that the pseudo-random selection is periodically changed such that for each antenna module a specified duty cycle in not exceeded and that an average radiated power in both operating modes is at least substantially the same.

The invention is based on the principle of thinned arrays, as for instance described in M.I. Skolnik's "Radar Handbook", second edition, page 7.26. The prevailing consideration here is that if only a limited number of antenna modules is active and this number of modules is distributed over the radiating antenna surface in a pseudo-random way, a beam is obtained with substantially unmodified parameters.

A favourable operation is effected if a new pseudo-random selection is made by each time activating only one antenna module and simultaneously deactivating an other antenna module.

The invention will now be described with reference to the following figures, of which
- Fig. 1: schematically represents the front view of a phased array antenna;
- Fig. 2: schematically represents an antenna module provided with an output amplifier;
- Fig. 3: schematically represents an antenna module provided with a FET output amplifier.

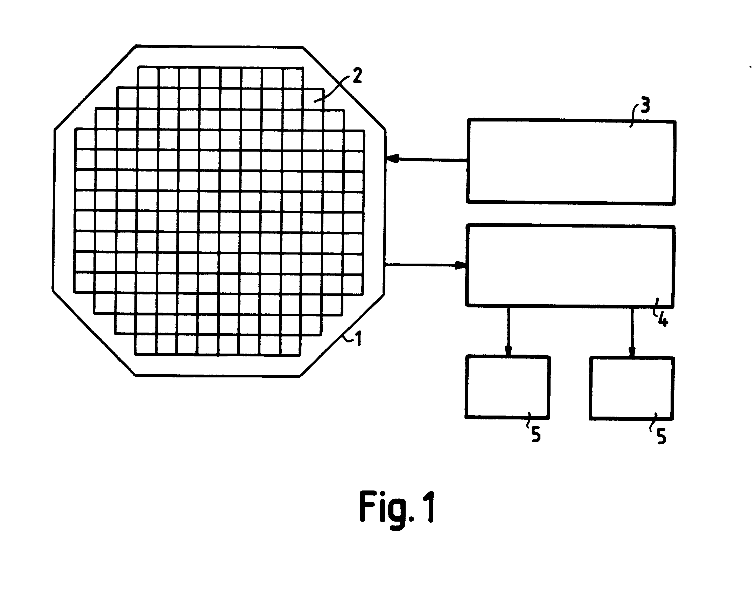

Fig. 1 schematically represents the front view of a phased array antenna 1 comprising 172 modules 2. Each module is on the front provided with a radiating element, which is not shown in the drawing, each module is furthermore provided with a control circuit, a transmitter-output amplifier, a receive circuit and a T/R device, all this as known in the art. The radar apparatus comprising the phased array antenna further comprises a control computer 3 for transferring commands to the phased array antenna, a video processing computer 4 for evaluating the video signal from the phased array antenna and several display units 5. These parts will not be further discussed in view of their irrelevance to the invention in question.

A phased array antenna used for target detection and tracking commonly consists of several thousands of modules. The specific embodiment described here comprises approximately 4000 modules.

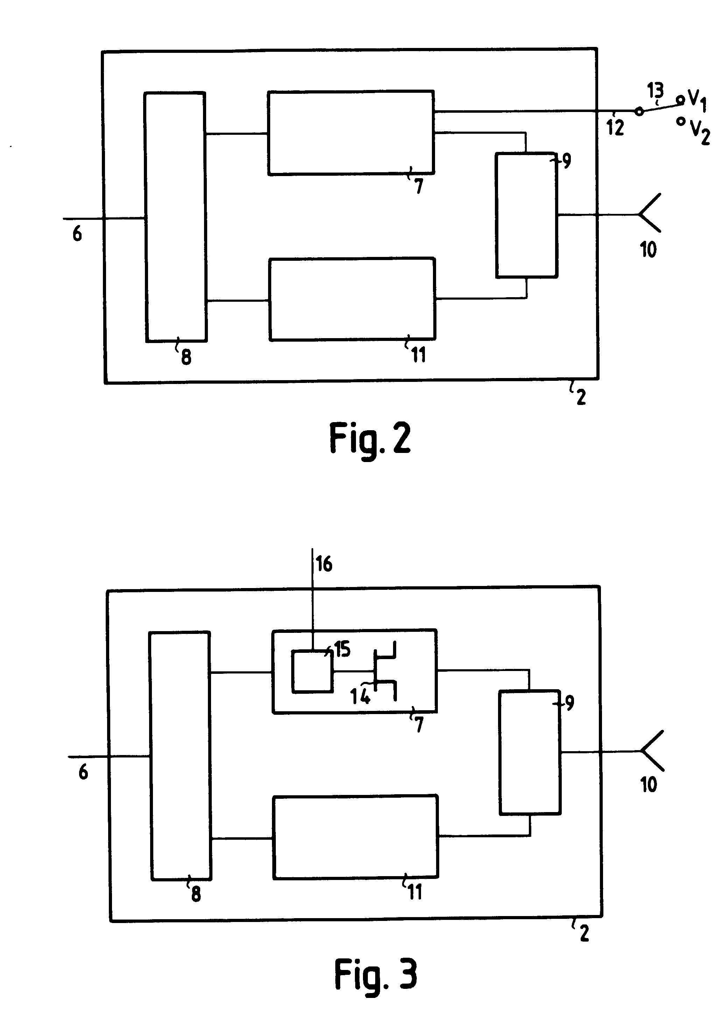

Fig. 2 schematically presents an antenna module 2. During the transmit cycle RF input 6, usually connected to a RF summing and distribution network, supplies RF energy to a transmitter-output amplifier 7, through an adjustable phase shifter 8. The amplified RF energy is subsequently supplied to radiating element 10 through a T/R device 9. During the receive cycle, RF energy received by radiating element 10 is supplied to receiver 11 through T/R device 9 and is subsequently supplied to RF input 6 through adjustable phase shifter 8. For transmission a maximum duty cycle of approximately 25% is required, which is determined by the design of transmitter-output amplifier 7 and in particular by the desired peak power and permissible dissipation. Antenna module 2 is furthermore provided with supply voltage connections; fig. 2 shows the supply voltage connections 12 for the output amplifier 7. When used as radar apparatus, output amplifier 7 is connected to a supply voltage V₁. The output amplifier 7, used as illuminator, is connected, through supply voltage connection 12 through switch 13 to a lower supply voltage V₂, which is selected such that the permissible dissipation of transmitter-output amplifier 7 is not exceeded at continuous operation. In principle, the supply voltage V₁ might also be reduced, but the very flexible use of a phased array antenna, where pulsed transmissions and short CW transmissions rapidly alternate, renders this impossible. A phased array antenna requires a distributed arrangement of buffer capacitors for providing peak power during pulsed radar transmissions. Particularly these buffer capacitors render a rapid variation of the supply voltage substantially impossible. However, it is possible to apply supply voltages V₁ and V₂ to module 2, thus enabling switch 13 to be positioned in the module. This then has the advantage that two buffer capacitors can be positioned in the module.

Fig. 3 schematically represents an antenna module 2, the output amplifier 7 being provided with FET amplifier elements 14. At a constant supply voltage, the dissipation of an output amplifier can also be reduced by reducing the current through the FET amplifier elements. In this respect it suffices to provide the gate inputs of the FET amplifier with a modified bias voltage using a bias circuit 15 which is controlled through control line 16. An obvious method is to apply the desired gate-setting voltage directly through control line 16. Owing to deviations in the various FET amplifier elements 14, this is a suboptimal solution. In view of this, a voltage is applied through control line 16, which voltage is proportional to the desired current through the FET amplifier elements. Bias circuit 15 also comprises current sensors, for instance series resistors, to determine the currents through the FET amplifier elements. Subsequently, the measured currents can be compared with the desired current and the bias voltages can be controlled by bias circuit 15 such that the measured currents correspond with the desired current. Bias circuit 15 may, for instance, be provided with operational amplifiers at whose inputs the voltage of control line 16 is combined with the output signals of the current sensors and whose outputs are connected to the gate inputs of individual or groups of FET amplifier elements.

The present invention is based on the thinned array principle. The assumption here is that the radiated power can be reduced by energising only a fraction of the total available modules for transmission. If this is effected such that the energised modules are evenly distributed over the antenna surface, preferably in a pseudo-random way, the beam formation remains at least substantially unaffected. For instance, if an antenna comprises 4000 modules with a maximum duty cycle of 25%, the activation of 1000 modules will cause a reduction of the radiated power by 6 dB and a 6 dB deterioration of the ratio between the antenna main lobe and the antenna side lobes. If, for instance, a maximum pulse length of 100 µsec is allowed, the transmission function shall have been taken over by other modules after 100 µsec have elapsed. This can be solved in an extremely advantageous way by deactivating a module every 100 nsec and activating another module, all this in such a way that a pseudo-random distribution of activated modules across the antenna surface is continuously maintained. By moreover causing the activation of a antenna module to coincide with the deactivation of another antenna module, a deterioration of the antenna beam is precluded.

If the active phased array is designed for transmitting relatively short pulses with a limited duty cycle, continuous transmission based on only one of said provisions will generally be impossible. It should be noted, however, that these provisions may be implemented in combination. A radar apparatus provided with an active phased array antenna, operating with a maximum pulse length of 5 µsec and a maximum duty cycle of 5%, will be capable of continuous transmissions by halving the supply voltage of the output amplifiers, halving the current through the FET output amplifiers and by each time activating only 20% of the modules.

## Claims

1. Radar apparatus provided with an active phased array antenna (1) provided with N antenna modules (2), for generating pulsed radar transmissions in a first operating mode and for generating CW transmissions in a second operating mode, characterized in that in the second operating mode only M out of N antenna modules (2) are active, with M<N, that the N active modules are selected in a pseudo-random way, that the pseudo-random selection is periodically changed such that for each antenna module (2) a specified duty cycle is not exceeded and that an average radiated power in both operating modes is at least substantially the same.

2. Radar apparatus as claimed in claim 1, characterised in that a new pseudo-random selection is made by each time activating an antenna module (2) and at least substantially simultaneously deactivating an other antenna module (2).

## Patentansprüche

1. Radargerät, versehen mit einer aktiven phased array-Antenne (1), versehen mit N Antennenmoduln (2), zur Generierung von Impuls-Radaraussendungen in einer ersten Betriebsmode und zur Generierung von Dauerstrich-Aussendungen in einer zweiten Betriebsmode, dadurch gekennzeichnet, daß in der zweiten Betriebsmode nur M von N Antennenmoduln (2) aktiv sind, wobei M<N, daß die N aktiven Moduln nach einer Pseudozufallsmethode selektiert werden, daß die Pseudozufallsselektion periodisch geändert wird, und zwar so, daß für jeden einzelnen Antennenmodul (2) ein spezifizierter Arbeitszyklus nicht überschritten wird, und daß eine mittlere Strahlungsleistung in beiden Betriebsmoden zumindest im wesentlichen gleich ist.

2. Radargerät gemäß Anspruch 1, dadurch gekennzeichnet, daß jedes Mal eine neue Pseudozufallsselektion stattfindet durch ein Antennenmodul (2) zu aktivieren, und zumindest im wesentlichen gleichzeitig ein anderes Antennenmodul (2) zu deaktivieren.

## Revendications

1. Appareil radar muni d'une antenne en réseau à phase active (1) présentant N modules d'antenne (2), pour produire des émissions radar pulsées dans un premier mode de fonctionnement et pour produire des émissions d'ondes continues dans un second mode de fonctionnement, caractérisé en ce que, dans le second mode de fonctionnement, seul M modules d'antenne parmi les N modules d'antenne sont actifs, avec M<N, en ce que les N modules actifs sont choisis d'une manière pseudo-aléatoire, en ce que la sélection pseudo-aléatoire est modifiée de manière périodique de telle manière que, pour chaque module d'antenne (2), un cycle opératoire spécifié ne soit pas dépassé et qu'une puissance rayonnée moyenne dans les deux modes de fonctionnement soit au moins sensiblement la même.

2. Appareil radar tel que revendiqué à la revendication 1, caractérisé en ce qu'une nouvelle sélection pseudo-aléatoire est effectuée en rendant actif à chaque fois un module d'antenne (2) et en rendant inactif de manière au moins sensiblement simultanée un autre module d'antenne (2).
